# EUROPEAN PATENT APPLICATION

(11) **EP 4 266 186 A1**
(43) Date of publication of application: **25.10.2023**
(21) Application number: 20965935.8
(22) Date of filing: 16.12.2020
(51) Int. Cl.: G06F 16/215, G06F 16/2458

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: UEMURA, Kento, Kawasaki-shi, Kanagawa 211-8588 (JP); KOYANAGI, Yusuke, Kawasaki-shi, Kanagawa 211-8588 (JP); OHORI, Kotaro, Kawasaki-shi, Kanagawa 211-8588 (JP)
(74) Representative: Hoffmann Eitle
(86) International application number: PCT/JP2020/047051
(87) International publication number: WO 2022/130547

(57) **Abstract**

An information processing program for causing a computer to execute processing including: extracting, for a plurality of pieces of combination data each of which is a combination of a plurality of feature amounts that includes an invariable feature amount and a variable feature amount that represent features of a target, combination data to be processed based on the plurality of pieces of combination data according to relation between the respective pieces of combination data; executing causal search processing for the variable feature amount according to the invariable feature amount by using the combination data to be processed; and selecting, based on a result of the causal search processing, a specific variable feature amount that corresponds to the specified invariable feature amount, to present the selected specific variable feature.

## Description

### FIELD

The present disclosure relates to an information processing program, an information processing method, and an information processing apparatus.

### BACKGROUND

In recent years, it has become easy for companies and individuals to collect, hold, and analyze various types of an enormous amount of information due to expansion of networks, a rapid increase in open data, a decrease in a cost for collecting and holding information, and the like. However, as an amount of information to be handled increases, extraction of appropriate data suitable for an object may become difficult work. Thus, attention is focused on data mining that uses artificial intelligence that performs machine learning, statistics, and the like to perform data analysis and extract target knowledge from a large amount of data.

There is a technology of extracting knowledge about solving a specific problem or job from past data by using this data mining, and planning future measures and establishing an action guideline by using the extracted knowledge. For example, it is possible to propose an appropriate action for solving a future problem by using past data including a feature amount that is information including an "attribute" for which intervention is not possible and an "action" for which intervention is possible and an objective variable corresponding to a result corresponding to the feature amount. The attribute is information representing a feature of a person or an object as a target for obtaining a result, and includes a position, a family structure, and the like. Furthermore, the action is work performed to obtain a result set as the objective variable. As an example, in a case where the objective variable is presence or absence of contract of insurance, work such as telephone sales or sending direct mail is an action corresponding to the objective variable.

In a case where an appropriate action for achieving an object is proposed, it is desirable to indicate an effective action for each group of persons or objects satisfying a certain condition. Additionally, the group of persons or objects satisfying the certain condition is represented by a set of attributes, and may be referred to as a "segment" here.
Conventionally, an expert determines and proposes an action considered to be important for achievement of an object for each segment based on past data and personal knowledge.

### SUMMARY

### TECHNICAL PROBLEM

However, a plurality of actions may be proposed for a single segment in any case of action presentation by an expert or action presentation using machine processing. Furthermore, in a case where a target belongs to a plurality of segments, a plurality of actions is proposed for one target by proposing an action for each segment. In a case where a plurality of actions is proposed in this manner, there is a possibility that strength of a relationship between the actions may be determined, but it is difficult to grasp relation, and it is not easy to select an appropriate action. In particular, relation such as a causal relationship between the actions is unclear, and it is difficult to determine which action may be more appropriate. Furthermore, it is conceivable that a correlation and the causal relationship between the actions are confused, and there is a possibility that appropriate selection of an action becomes more difficult.

Moreover, in a case where an action proposal is made in consideration of the relation such as the causal relationship, it is possible to easily make an action proposal for a new target by preparing a set of a segment and an action for achieving a goal and estimating and storing the relation in advance. However, in a case where segment candidates are extracted from an original data group by using an emerging pattern enumeration algorithm or the like, there is a possibility that an enormous number of segment candidates are generated. Furthermore, there are cases where the segment and the action are not explicitly separated or are difficult to separate, such as a case where certain information may be both an attribute and an action. In order to obtain relation for all of these segment candidates and determine whether or not it is a segment whose important factor for achieving an object changes, an enormous number of relation searches are performed. Since such an enormous number of relation searches needs a large processing cost for a computer, it is unrealistic for the computer to simply execute processing on all the segment candidates.

The disclosed technology has been made in view of the above, and an object thereof is to provide an information processing program, an information processing method, and an information processing apparatus that efficiently achieve optimization of action presentation for achieving an object.

### SOLUTION TO PROBLEM

In one aspect, an information processing program, an information processing method, and an information processing apparatus disclosed in the present application cause a computer to execute the following processing. For a plurality of pieces of combination data each of which is a combination of a plurality of feature amounts that includes an invariable feature amount and a variable feature amount that represent features of a target, combination data to be processed is extracted based on the plurality of pieces of combination data according to relation between the respective pieces of combination data. Causal search processing for the variable feature amount according to the invariable feature amount is executed by using the combination data to be processed. A specific variable feature amount that corresponds to the specified invariable feature amount is selected and presented based on a result of the causal search processing.

### ADVANTAGEOUS EFFECTS OF INVENTION

According to one aspect of an information processing program, an information processing method, and an information processing apparatus disclosed in the present application, it is possible to efficiently achieve optimization of action presentation for achieving an object.

### BRIEF DESCRIPTION OF DRAWINGS

FIG. 1 is a block diagram of an action presentation device according to an embodiment.
FIG. 2 is a diagram for describing extraction under a first condition.
FIG. 3 is a diagram for describing a similarity relationship between groups of targets represented by segments.
FIG. 4 is a diagram for describing extraction under a second condition.
FIG. 5 is a diagram for describing extraction under a third condition.
FIG. 6 is a diagram representing an example of correspondence information between a segment and a presentation action.
FIG. 7 is a flowchart of action presentation processing by the action presentation device according to the embodiment.
FIG. 8 is a hardware configuration diagram of the action presentation device according to the embodiment.

### DESCRIPTION OF EMBODIMENTS

Hereinafter, an embodiment of an information processing program, an information processing method, and an information processing apparatus disclosed in the present application will be described in detail with reference to the drawings. Note that the following embodiment does not limit the information processing program, the information processing method, and the information processing apparatus disclosed in the present application.

### [Embodiment]

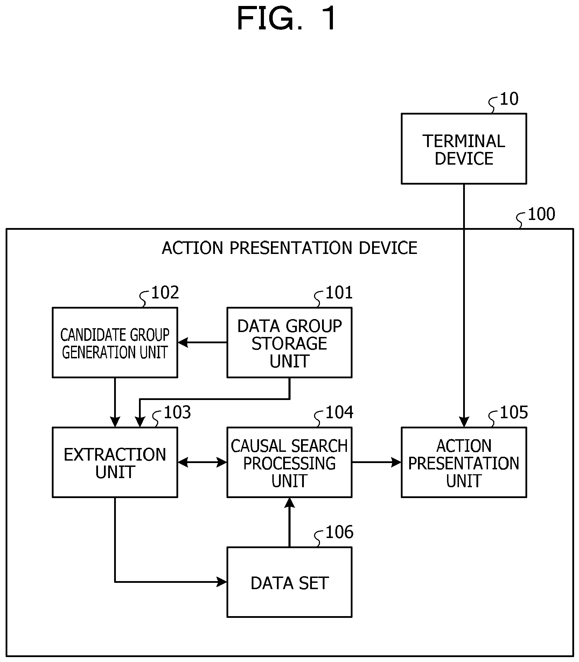

FIG. 1 is a block diagram of an action presentation device according to the embodiment. As illustrated in FIG. 1, an action presentation device 100 that is an information processing apparatus includes a data group storage unit 101, a candidate group generation unit 102, an extraction unit 103, a causal search processing unit 104, and an action presentation unit 105.

The data group storage unit 101 stores a data group related to achievement of a specific object. As the specific object, for example, a wide variety of objects may be handled without particular limitation, such as contract of insurance and treatment of a disease. Information indicating that various actions are performed on a target having various attributes for the specific object is included. The target may be a person or an object as long as it is a target object for achieving a goal.

The attribute is information representing a feature given to each target. One or a plurality of attributes may be associated with one target. For example, in a case where a person is the target, gender, age, presence or absence of a matrimonial relationship, presence or absence of an owned house, presence or absence of an owned car, and the like are exemplified. The attribute is a feature amount of the target for which external intervention is difficult, and is an invariable attribute that is difficult or unwilling to change for a person who desires to achieve a goal. Note that the attribute is information that changes for each target and is a variable.

Furthermore, an action for a target for which external intervention is possible is referred to as an action. The action is an action performed to achieve a goal on the target. For example, in a case where the goal is establishment of contract of insurance, telephone sales, transmission of direct mail, and the like are actions. The action is a variable feature amount having a variable attribute that may be said to be one of features of the target and may be changed by a person who desires to achieve of the goal. Note that the action is one variable that changes for each target. In the present embodiment, a case will be described where the action is a binary variable of whether or not to execute the action.

Here, in the attributes and the actions included in the respective pieces of data of the data group stored in the data group storage unit 101, there is also information that may be included in either the attributes or the actions. For example, information "participate in an explanatory meeting" may be considered as one of the attributes of the target such as "participated in the explanatory meeting", or may be considered as one of the actions such as "encourage participation in the explanatory meeting".

In this manner, by performing an action on a target having one or a plurality of attributes, a value of an objective variable, which is a result related to achievement of a goal, is obtained. The objective variable may be binary information representing whether or not a specific object has been achieved, or may be continuous value information representing a degree of achievement of the object.

The candidate group generation unit 102 acquires all pieces of data stored in the data group storage unit 101. Next, the candidate group generation unit 102 acquires all attributes and actions from the acquired data. At this time, the candidate group generation unit 102 acquires a variable that may be both the attribute and the action as both the attribute and the action. Next, the candidate group generation unit 102 generates various segments that are single attributes or combinations of a plurality of attributes by using the acquired attributes. The segment is an invariable feature amount in which one or a plurality of invariable attributes is combined, and is a unit in which targets having the same attribute or targets having the same combination of attributes are collected. The segment is a group including one or more variables.

For example, a case is conceivable where the variable included in the segment is a binary variable. In this case, the segment is a group that satisfies a condition that values of the included variables are all 1. Besides, a case is conceivable where the variable included in the segment is, for example, a continuous variable such as the number of times of browsing a homepage. In this case, in the present embodiment, the candidate group generation unit 102 converts the variable included in the segment into a binary variable such that a case where the variable exists in a certain range is set to 1 and another case is set to 0. With this configuration, the segment having the continuous variable is also converted into the segment having the binary variable, and becomes a group satisfying the condition that the values of the included variables are all 1.

Here, in the present embodiment, both the segment and the action are used for a causal search as the binary variables, but a continuous variable may be used for the causal search, or the continuous variable and the binary variable are used in a mixed situation.

Next, the candidate group generation unit 102 generates a set of a segment and an action by combining the action that may be an important factor for achieving the object under each segment and each segment. Hereinafter, the set of the segment and the action may be referred to as "combination data". For example, the candidate group generation unit 102 generates a candidate group of the combination data by obtaining a pair of a segment and an action having a high relationship with the objective variable by using an emerging pattern enumeration algorithm (Wide Learning) or the like. The candidate group generation unit 102 generates, for example, a candidate group of combination data including a set in which the segment is X1 and X3 and the action is X4, a set in which the segment is X4 and the action is X5, and the like. Here, X1 to X5 are variables. The candidate group generation unit 102 outputs the generated candidate group to the extraction unit 103.

At this stage, the total number of pieces of combination data is large, and a processing amount becomes enormous in a case where all types of relation are searched for. Thus, the action presentation device 100 according to the present embodiment narrows down the combination data by the following processing.

The extraction unit 103 narrows down combination data used for determining an action to be presented from combination data generated by the candidate group generation unit 102, and extracts combination data to be processed. Hereinafter, details of processing of the extraction unit 103 will be described.

The extraction unit 103 receives input of a candidate group of the combination data from the candidate group generation unit 102. Next, the extraction unit 103 extracts combination data used for determining a presentation action based on a causal relationship from the candidate group according to the following conditions.

A first condition is a condition based on a logical relationship between segments. A logical relationship such as inclusion or equivalence may be established between the respective segments of different types of combination data. Thus, the first condition is a condition for extracting combination data to be processed by using an inclusion relationship of values of segments that are invariable feature amounts between a plurality of pieces of combination data. More specifically, the first condition is a condition that, regarding pieces of combination data in which segments are in an equivalent or inclusion relationship, the pieces of combination data is set as one piece of combination data in a case where the pieces of combination data may be collected.

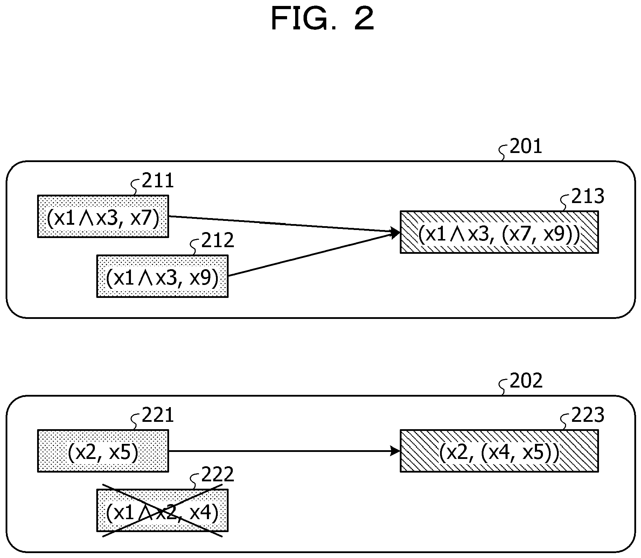

FIG. 2 is a diagram for describing extraction under the first condition. In FIG. 2, a state 201 represents an example of an extraction procedure in the case of equivalence, and a state 202 represents an example of an extraction procedure in the case of inclusion.

The extraction unit 103 compares combinations of attributes included in the respective segments of the combination data, and determines that the segments are equivalent to each other in a case where the combinations of the included attributes match. In the case of the equivalent segments, by performing a causal search by collecting the respective actions, it is possible to grasp a causal relationship between each action for the segment and the object. Thus, the extraction unit 103 collects the combination data in which the segments are equivalent into one new combination data. Then, the extraction unit 103 extracts the new combination data as combination data to be processed to be used for determination of a presentation action, and stores the combination data to be processed as a data set 106 to be used for determination of a presentation action. In this case, the extraction unit 103 excludes the combination data before being collected from the data set 106.

For example, as in the state 201, in combination data 211 of a segment including attributes x1 and x3 and an action x7 and combination data 212 of a segment including the attributes x1 and x3 and an action x9, the segments are equivalent. Thus, the extraction unit 103 collects and extracts the combination data 211 and the combination data 212 as combination data 213 of the segment including the attributes x1 and x3 and the actions x7 and x9, and stores the combination data 213 in the data set 106 used for determination of a presentation action.

Furthermore, in a case where a combination of attributes included in one segment is a component of a combination included in another segment, the extraction unit 103 determines that the another segment is included in the one segment. In a case where a plurality of segments has an inclusion relationship, when a specific action is an important factor for achieving the object for a segment which includes a small number of attributes and for which limitation is loose, it is considered that the specific action is also an important factor for achieving the object for a segment which includes a large number of attributes and for which limitation is strict. In other words, it is considered that, in a case where a causal search is performed, when a causal search for achieving the object of the specific action is included in a causal search for the segment for which limitation is loose, a causal search for the segment for which limitation is strict may be omitted.

In the combination data in which the segments have the inclusion relationship, the extraction unit 103 collects and sets the segment of the set on the including side and the action on the included side as new combination data. Then, the extraction unit 103 requests the causal search processing unit 104 to execute a causal search for the new combination data. Thereafter, the extraction unit 103 acquires, from the causal search processing unit 104, a value of a causal effect for achieving the object in a case where the action is performed on the segment in the combination data for which the causal search has been requested.

The causal effect is information representing how much an objective variable changes when the variable is moved by a predetermined unit amount. In the present embodiment, since an action as a binary variable is used, the casual effect is how the objective variable changes in a case where an action is performed from a situation where the specific action is not performed, or an amount of change of the objective variable in a case where the specific action being performed is no longer performed. For example, in a case where a certain action has negative causality for the objective variable, such as having a situation where the action makes a result worse, the extraction unit 103 acquires a causal effect in a case where the specific action being performed is no longer performed from the causal search processing unit 104.

Furthermore, a "unit amount" of a causal effect in a case other than binary is a value in a case where ±1 is performed on a value of an action or a value calculated according to a predetermined amount of change of a value of the variable. For example, in a case where a variable that is temperature is changed, when the temperature is changed with a unit of 10 degrees as a minimum, the causal effect is calculated by considering ±10 degrees as the unit amount.

Next, the extraction unit 103 compares the acquired value of the causal effect with a predetermined importance threshold, and in a case where the causal effect exceeds the importance threshold, determines that the action is an important factor for achieving the object for the segment of the including combination data. Here, the importance threshold is preferably determined according to a target field and data to be used.

Then, in a case where the action of the combination data including the included segment is also an important factor in the including segment, the extraction unit 103 collects the including segment and the respective actions of the including combination data and the included combination data to generate one piece of new combination data. Then, the extraction unit 103 extracts the new combination data as combination data to be processed to be used for determination of a presentation action, and stores the combination data to be processed as the data set 106 to be used for determination of a presentation action. In this case, the extraction unit 103 excludes the combination data before being collected from the data set 106.

For example, as in the state 202, in combination data 221 of a segment including an attribute x2 and an action x5 and combination data 222 of a segment including the attributes x1 and x2 and an action x4, the segments are in an inclusion relationship. In this case, the segment of the combination data 221 includes the segment of the combination data 222. Thus, the extraction unit 103 creates a new set by combining the segment including the attribute x2 of the combination data 221 and the action x4 of the combination data 222. Then, the extraction unit 103 causes the causal search processing unit 104 to perform a causal search and acquires a value of a causal effect. Then, in a case where the acquired causal effect exceeds the importance threshold, the extraction unit 103 generates one new set by collecting the segment including the attribute x2 of the combination data 221 and the actions x4 and x5 of the combination data 221 and 222, and extracts the new set as combination data used for determination of a presentation action.

Note that, in a case where the action of the combination data including the included segment is not an important factor for the including segment, a possibility remains that the action of the combination data including the included segment is an important factor for the included segment. Thus, in that case, the extraction unit 103 does not narrow down the set of the segment and the action, but extracts both the combination data including the including segment and the combination data including the included segment as the combination data used for determination of a presentation action, and stores the combination data used for determination of a presentation action in the data set 106.

Here, in the present embodiment, whether or not each action is an important factor is determined by using the importance threshold, but it is also possible to determine the important factor without depending on a field or a type of data. As simple examples that do not depend on the field or the type of the data, the extraction unit 103 may determine whether or not each action is the important factor depending on whether or not a value of a causal effect is 0, and may further determine whether or not each action is the important factor depending on whether a value of a causal effect is positive or negative.

In the case of using whether or not a value of a causal effect is 0, it is considered that a causal effect of a certain action on an objective variable of 0 means that the action is not a cause of the objective variable. Thus, the extraction unit 103 assumes an action whose causal effect is not 0 as the important factor. In other words, in a case where it is desired to examine all causal actions, no matter how small an influence of the actions on an objective variable is, importance of the actions may be determined by using whether or not values of causal effects are 0.

Furthermore, in a case where whether a value of a causal effect is positive or negative is used, difference in a reference sign of the causal effect make it possible to determine whether achievement of the object is approached or moved away by executing the action. Thus, in a case where it is determined whether or not an action is an important factor by using whether a reference sign is positive or negative in addition to whether or not a value of a causal effect is 0, the extraction unit 103 performs, for example, the following determination. In other words, the extraction unit 103 sets an action whose causal effect has a positive value as an important factor in a case where it is desired to extract an action having a good influence, and sets an action whose causal effect has a negative value as an important factor in a case where it is desired to extract an action having a bad influence.

Additionally, for example, the maximum number n of important factors may be determined in advance, and the extraction unit 103 may determine top n actions as the important factors in descending order of causal effects. In this method, in a case where a causal effect having a negative value is considered to be important, the extraction unit 103 selects the top n in descending order of absolute values of the causal effects.

Further additionally, in a case where an objective variable is binary, the extraction unit 103 may determine an action whose causal effect is +1 or more as an important factor. In this case, the extraction unit 103 excludes an action which does not change the objective variable from 0 to 1 when executed from the important factor.

A second condition is a condition based on a similarity relationship between groups of targets represented by segments. Even between segments having different variables, groups of targets applied to these segments may be similar. When the groups of the targets are similar to each other, it is considered that causal relationships for achieving the object in a case where a specific action is performed are also similar to each other. Thus, the second condition is a condition for extracting combination data to be processed by using a similarity relationship between groups of targets represented by segments that are invariable feature amounts between a plurality of pieces of combination data. More specifically, the second condition is a condition that sets in which groups of targets represented by segments match or are similar to each other are collected into one set.

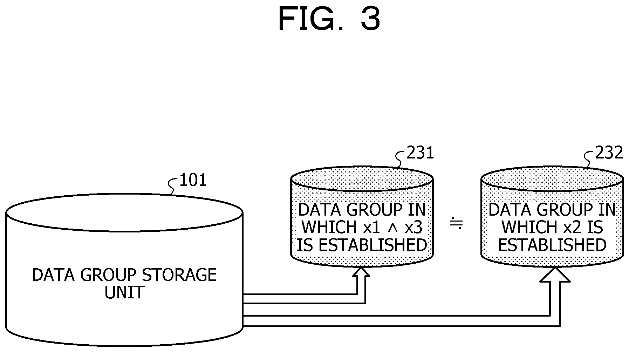

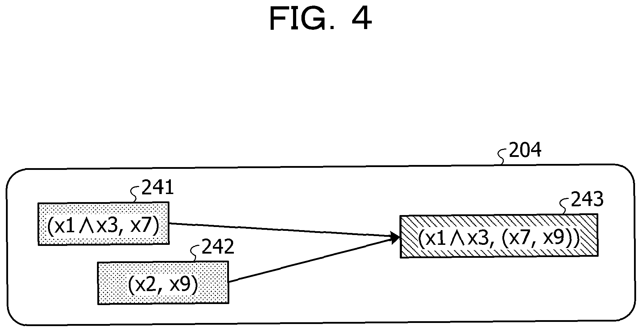

FIG. 3 is a diagram for describing a similarity relationship between groups of targets represented by segments. Furthermore, FIG. 4 is a diagram for describing extraction under the second condition.

The extraction unit 103 acquires each segment of combination data, and acquires targets included in each acquired segment from data held by the data group storage unit 101. For example, the extraction unit 103 acquires data group 231 in FIG. 3 for a segment including the attributes x1 and x3. Furthermore, the extraction unit 103 acquires data group 232 in FIG. 3 for a segment including the attribute x2.

Next, the extraction unit 103 compares the respective groups of the targets to determine whether the groups of the targets match or are similar to each other. The extraction unit 103 determines, in a case where all targets included in groups of targets represented by the respective certain segments are the same between the segments, the groups of the targets represented by the segments match. Furthermore, the extraction unit 103 calculates similarity between the groups for the groups of the targets represented by the respective certain segments by using a Jaccard coefficient or the like. Then, in a case where the calculated similarity is a predetermined similarity threshold or more, the extraction unit 103 determines that the groups of the targets represented by the respective segments are similar to each other. For example, when calculating the similarity by using the Jaccard coefficient, the extraction unit 103 sets the similarity threshold to 0.95 or the like and obtains the similarity. For example, in the example of FIG. 3, the extraction unit 103 compares targets included in the data group 231 with targets included in the data group 232, and determines whether or not the targets match or whether or not the targets are similar to each other.

Here, in the case of the segments in which represented groups of targets match or are similar to each other, there is a property that results of causal searches are also similar to each other. Thus, the extraction unit 103 selects any one segment of combination data in which groups of targets represented by the segments match or are similar to each other. In this case, a method of selecting the segment is not particularly limited, but for example, the extraction unit 103 may select a segment including more attributes, or may cause the causal search processing unit 104 to search for a causal effect and select a segment with a higher causal effect. Next, the extraction unit 103 generates new combination data by the selected segment and an action of each combination data. In other words, in a case where similarity of the groups of the targets included between the segments is large or matches, the extraction unit 103 integrates these segments and regards them as the same segment to generate one piece of combination data. Then, the extraction unit 103 extracts the new combination data as combination data to be processed to be used for determination of a presentation action, and stores the combination data to be processed as a data set 106 to be used for determination of a presentation action. In this case, the extraction unit 103 excludes the combination data before being collected from the data set 106.

For example, a case will be described where, as in a state 204 of FIG. 4, groups of targets represented by the respective segments are similar to each other between combination data 241 of a segment including the attributes x1 and x3 and the action x7 and combination data 242 of a segment including the attribute x2 and the action x9. In this case, the extraction unit 103 selects a segment from either the combination data 241 or the combination data 242. Here, the extraction unit 103 selects the segment of the combination data 241, generates new combination data 243 by combining the segment with the respective actions x7 and x9 of the combination data 241 and 242, and extracts the new combination data 243 as combination data to be processed.

The third condition is a condition based on a difference from an important factor in an entire data group. An action to be an important factor having a different tendency from the entirety is considered to be an important factor more specialized for the object. In other words, it may be considered that an action that does not appear as an important factor for the entirety is likely to be an important action in a specific segment. The third condition is a condition for extracting combination data to be processed by using a matching degree of an action of each piece of combination data with respect to a tendency of an action that is a variable feature amount in the entirety of a plurality of pieces of combination data. More specifically, the third condition is a condition of excluding combination data including an action that matches an important factor in an entire data group.

The extraction unit 103 acquires all pieces of data from the data group storage unit 101, creates combination data of a segment without a condition including all targets and each action, and outputs the combination data to the causal search processing unit 104. Thereafter, the extraction unit 103 acquires, from the causal search processing unit 104, a value of a causal effect for achieving the object of each action for the segment without the condition. Then, the extraction unit 103 specifies an action whose causal effect has a value of a predetermined entire threshold or more as an important factor for the entirety. Thereafter, the extraction unit 103 excludes combination data including the specified important factor as an action from the data set 106.

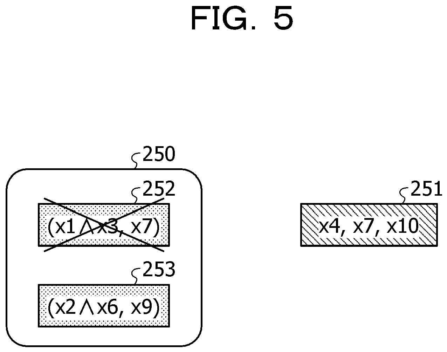

FIG. 5 is a diagram for describing extraction under the third condition. In FIG. 5, the extraction unit 103 specifies the actions x4, x7, and x10 as actions 251 to be an important factor for the entirety. For example, a case will be described where, as in a state 205, there are combination data 252 of a segment including the attributes x1 and x3 and the action x7 and combination data 253 of a segment including the attributes x2 and x6 and the action x9. In this case, the extraction unit 103 excludes the combination data 252 including the action x7 to be the important factor for the entirety from the data set 106. The extraction unit 103 extracts, as combination data to be processed used for determination of an action to be presented, the combination data 253 that does not include, as an action, any one of the actions 251 to be the important factor for the entirety.

Here, in the present embodiment, a set of actions having high importance is excluded, but the present embodiment is not limited to this. For example, the extraction unit 103 may exclude all pieces of combination data including an action to be an important factor for achieving the object for the entirety from the data set 106. Furthermore, the extraction unit 103 may notify the causal search processing unit 104 to lower the priority in a causal search without the exclusion from the data set 106.

The extraction unit 103 extracts the combination data to be processed used for determination of a presentation action by using the first to third conditions as described above, and stores the extracted combination data to be processed in the data set 106.

In the case of receiving, at the time of extraction of combination data to be processed, input of the combination data from the extraction unit 103, the causal search processing unit 104 executes causal search processing of an action according to the segment, and calculates a causal effect for achieving the object of the action for the segment. Here, the causal search processing unit 104 executes the causal search processing by using a causal search algorithm such as DirectLiNGAM to estimate a causal relationship, and in that case, the causal search processing unit 104 estimates also an expression of the causal relationship itself together with a causal order relationship between variables. In other words, for example, in a case where an objective variable is y1 and variables representing causal actions are y2 and y3, the causal search processing unit 104 also estimates an expression of a causal relationship itself such as y1 = f(y2, y3). For example, in a case where the DirectLiNGAM is used, the causal search processing unit 104 estimates the expression of the causal relationship itself as a linear expression y1 = a*y2 + b*y3 + c. Based on this estimated expression, the causal search processing unit 104 obtains a causal effect by calculating how much y1 as the objective variable changes when y2 is changed by a unit amount from certain values of y2 and y3. Then, the causal search processing unit 104 outputs the calculated value of the causal effect to the extraction unit 103.

Moreover, the causal search processing unit 104 acquires the data set 106 after the extraction of the combination data to be processed is completed. Then, the causal search processing is executed by using the causal search algorithm for each piece of combination data included in the data set 106, and a causal graph connected from a segment to the objective variable is created. The causal search processing unit 104 may use the DirectLiNGAM or the like as the causal search algorithm. Furthermore, the causal search processing unit 104 calculates a causal effect for achieving the object of each action for each segment. Thereafter, the causal search processing unit 104 outputs the created causal graph in each segment and the causal effect of each action for each segment to the action presentation unit 105.

The action presentation unit 105 receives input of a causal graph in each segment and a causal effect of each action for each segment from the causal search processing unit 104. Then, the action presentation unit 105 selects an action considered to be effective for achieving the object for each segment by using the causal graph and the causal effect.

For example, the action presentation unit 105 considers an action more distant from the object as an original action for achieving the object by using the causal graph, and selects the action as a presentation action for a segment. Furthermore, the action presentation unit 105 excludes an action generated after the object is achieved from the presentation action. Additionally, the action presentation unit 105 selects an action having a larger causal effect as a presentation action for a segment.

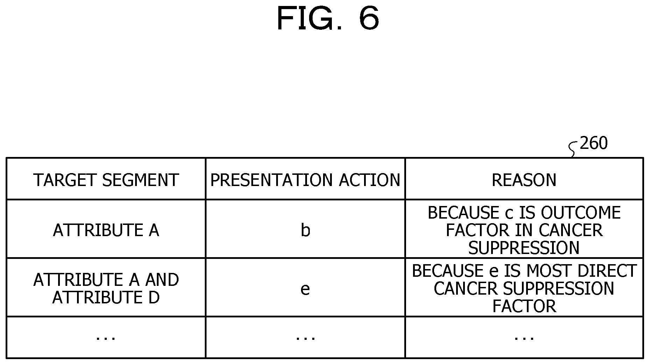

FIG. 6 is a diagram representing an example of correspondence information between a segment and a presentation action. The action presentation unit 105 generates correspondence information 260 as illustrated in FIG. 6 in which a selected presentation action is associated with each segment. Then, the action presentation unit 105 stores the generated correspondence information 260. Here, the action presentation unit 105 registers, as the correspondence information 260, a reason for selecting the presentation action in addition to the presentation action corresponding to the segment.

Thereafter, the action presentation unit 105 receives, from a terminal device 10, input of information regarding a target of presentation of an action together with a request for presentation of the action. Then, the action presentation unit 105 specifies a segment to which the target belongs from the information regarding the target of the presentation of the action. Thereafter, the action presentation unit 105 determines a presentation action for the specified segment by using the correspondence information 260 stored by itself. Then, the action presentation unit 105 transmits and presents the determined action to the terminal device 10. In other words, the action presentation unit 105 selects and presents a specific action that is a variable feature amount corresponding to a segment that is an invariable feature amount.

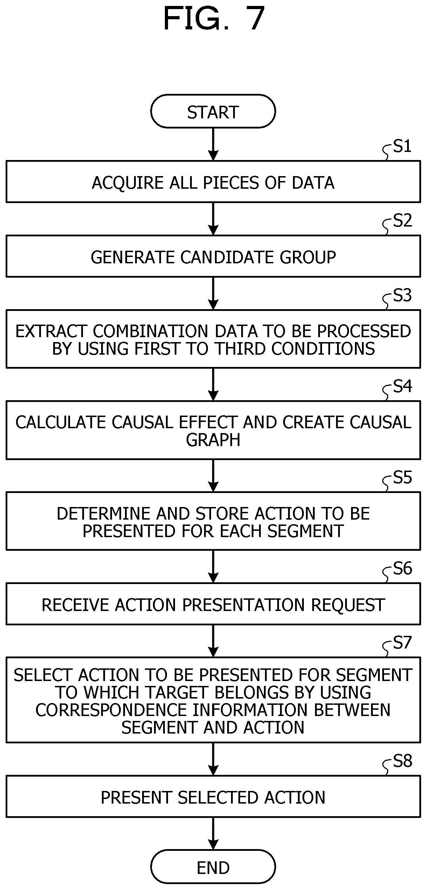

Next, a flow of action presentation processing by the action presentation device 100 according to the present embodiment will be described with reference to FIG. 7. FIG. 7 is a flowchart of the action presentation processing by the action presentation device according to the embodiment.

The candidate group generation unit 102 acquires all pieces of data stored in the data group storage unit 101 (Step S1).

Next, the candidate group generation unit 102 extracts attributes and actions from the acquired data. Moreover, the candidate group generation unit 102 generates a segment by combining one or a plurality of attributes. Next, the candidate group generation unit 102 selects an action that may be an important factor in a causal relationship for achieving the object under each segment by using the emerging pattern enumeration algorithm or the like. Then, the candidate group generation unit 102 generates a candidate group by combining each segment and an action selected for each segment to form combination data (Step S2).

The extraction unit 103 acquires the candidate group from the candidate group generation unit 102. Next, the extraction unit 103 extracts combination data to be processed by using the first to third conditions for narrowing down the combination data, and generates the data set 106 used for determination of a presentation action (Step S3).

The causal search processing unit 104 calculates a causal effect of each action for each segment by using the data set 106, and creates a causal graph in each segment (Step S4).

The action presentation unit 105 acquires the causal effect of each action for each segment calculated by the causal search processing unit 104 and the causal graph. Then, the action presentation unit 105 determines an action to be presented for each segment according to an action relationship for each segment by using the acquired causal effect and causal graph. Thereafter, the action presentation unit 105 stores correspondence information in which each segment is associated with the action to be presented (Step S5).

Thereafter, the action presentation unit 105 receives an action presentation request together with information regarding a segment of a target from the terminal device 10 (Step S6).

The action presentation unit 105 selects an action to be presented for the segment to which the target belongs by using the correspondence information between the segment and the action (Step S7).

Next, the action presentation unit 105 transmits the selected action to the terminal device 10, and presents the selected action to a user (Step S8).

As described above, the action presentation device according to the present embodiment narrows down combination data used for determination of an action to be presented from a logical relationship between segments, a similarity relationship between groups of targets represented by segments, and a matching degree for a tendency of an action in the entirety.

With this configuration, in a case where processing of finding an important factor for each segment in advance is performed, it is possible to reduce the number of targets for a causal search, and it is possible to determine an action to be an important factor for each segment in advance with a realistic processing amount. That is, the action presentation device according to the embodiment may reduce a processing cost of a computer needed for the causal search processing as compared with a related art, and contributes to improvement in processing performance. Furthermore, it is also possible to determine which is more effective to treat a variable as a segment or an action even in the case of the variable in which the segment and the action is not clearly separated. In this manner, by determining an action to be an important factor for each segment in advance, it is possible to easily determine a presentation action in a case where an action presentation request for a target belonging to a specific segment is received. Therefore, it is possible to efficiently achieve optimization of action presentation for achieving the object.

### (Hardware Configuration)

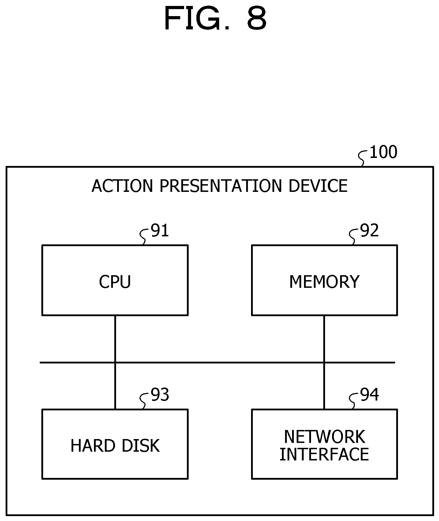

FIG. 8 is a hardware configuration diagram of the action presentation device according to the embodiment. As illustrated in FIG. 8, the action presentation device 100 according to the present embodiment includes, for example, a central processing unit (CPU) 91, a memory 92, a hard disk 93, and a network interface 94. The CPU 91 is coupled to the memory 92, the hard disk 93, and the network interface 94 via a bus.

The network interface 94 is an interface for communication between the action presentation device 100 and an external device. For example, the CPU 91 may be coupled to the terminal device 10 via the network interface 94.

The hard disk 93 implements functions of the data group storage unit 101 exemplified in FIG. 1 and a storage device that stores the data set 106. Furthermore, the hard disk 93 stores various programs including a program for implementing the functions of the candidate group generation unit 102, the extraction unit 103, the causal search processing unit 104, and the action presentation unit 105 exemplified in FIG. 1.

The CPU 91 reads various programs from the hard disk 93, and expands the read programs in the memory 92 to execute the expanded programs. With this configuration, the CPU 91 and the memory 92 implement the functions of the candidate group generation unit 102, the extraction unit 103, the causal search processing unit 104, and the action presentation unit 105 exemplified in FIG. 1.

### CITATION LIST

### NON-PATENT DOCUMENT

Non-Patent Document 1: Fujitsu Laboratories Ltd., "Fujitsu Bolsters its AI "Wide Learning" Technology with New Technique to Deliver Optimized Action Plans in Various Fields",[online], September 13, 2019, [retrieved on August 19, 2020], Internet < URL:https://www.fujitsu.com/global/about/resources/news/press-releases/2019/0913-01.html>

### REFERENCE SIGNS LIST

- 10: Terminal device
- 100: Action presentation device
- 101: Data group storage unit
- 102: Candidate group generation unit
- 103: Extraction unit
- 104: Causal search processing unit
- 105: Action presentation unit
- 106: Data set

## Claims

1. An information processing program for causing a computer to execute processing comprising:
extracting, for a plurality of pieces of combination data each of which is a combination of a plurality of feature amounts that includes an invariable feature amount and a variable feature amount that represent features of a target, combination data to be processed based on the plurality of pieces of combination data according to relation between the respective pieces of combination data;
executing causal search processing for the variable feature amount according to the invariable feature amount by using the combination data to be processed; and
selecting, based on a result of the causal search processing, a specific variable feature amount that corresponds to the specified invariable feature amount, to present the selected specific variable feature.

2. The information processing program according to claim 1, wherein combination data to be processed is extracted based on the plurality of pieces of combination data by using, as the relation, an inclusion relationship between values of the invariable feature amounts between the plurality of pieces of combination data.

3. The information processing program according to claim 2, wherein the respective pieces of combination data in which the respective invariable feature amounts have an equivalent or inclusion relationship are collected into one.

4. The information processing program according to claim 1, wherein combination data to be processed is extracted based on the plurality of pieces of combination data by using, as the relation, a similarity relationship between groups of the targets represented by the invariable feature amounts between the plurality of pieces of combination data.

5. The information processing program according to claim 4, wherein the respective pieces of combination data in which similarity between the groups of the targets represented by the invariable feature amounts has a value of a similarity threshold or more are collected into one.

6. The information processing program according to claim 1, wherein combination data to be processed is extracted based on the plurality of pieces of combination data by using, as the relation, a matching degree of the variable feature amounts of the respective pieces of combination data for a tendency of the variable feature amount in entirety of the plurality of pieces of combination data.

7. The information processing program according to claim 6, wherein the combination data that includes the variable feature amount that matches the variable feature amount to be an important factor in the entirety of the plurality of pieces of combination data is excluded from the combination data to be processed.

8. The information processing program according to claim 1, wherein
the combination data is data related to a predetermined object, and
the causal search processing is processing to obtain a causal relationship of achievement of the predetermined object of the variable feature amount according to the invariable feature amount.

9. The information processing program according to claim 1, wherein
based on the result of the causal search processing, the variable feature amount that corresponds to each of the invariable feature amounts is selected and correspondence information is stored, and
in response to the specification of the invariable feature amount, the specific variable feature amount that corresponds to the specified invariable feature amount is selected and presented based on the correspondence information.

10. An information processing method implemented by a computer, the method comprising:
extracting, for a plurality of pieces of combination data each of which is a combination of a plurality of feature amounts that includes an invariable feature amount and a variable feature amount that represent features of a target, combination data to be processed based on the plurality of pieces of combination data according to relation between the respective pieces of combination data;
executing causal search processing for the variable feature amount according to the invariable feature amount by using the combination data to be processed; and
selecting, based on a result of the causal search processing, a specific variable feature amount that corresponds to the specified invariable feature amount, to present the selected specific variable feature.

11. An information processing apparatus comprising:
an extraction unit that extracts, for a plurality of pieces of combination data each of which is a combination of a plurality of feature amounts that includes an invariable feature amount and a variable feature amount that represent features of a target, combination data to be processed based on the plurality of pieces of combination data according to relation between the respective pieces of combination data;
a casual search unit that executes causal search processing for the variable feature amount according to the invariable feature amount by using the combination data to be processed; and
an action presentation unit that selects, based on a result of the causal search processing, a specific variable feature amount that corresponds to the specified invariable feature amount, to present the selected specific variable feature amount.
